# EUROPEAN PATENT APPLICATION

(11) **EP 1 388 854 A1**
(43) Date of publication of application: **11.02.2004**
(21) Application number: 02728086.6
(22) Date of filing: 16.05.2002
(51) Int. Cl.: G11B 7/26

(54) **OPTICAL DISC ADHESIVE CURING DEVICE**

(30) Priority: 16.05.2001 JP 2001147132
(71) Applicant: Kitano Engineering Co., Ltd., Komatsushima-shi, Tokushima-ken 773-0008 (JP)
(72) Inventor: KITANO, Ryoko, c/o Kitano Engineering Co., Ltd., Komatsushima-shi, Tokushima 773-0008 (JP); YANO, Naoto, c/o Kitano Engineering Co., Ltd., Komatsushima-shi, Tokushima 773-0008 (JP); YOSHIDA, Masayuki, c/o Kitano Engineering Co., Ltd, Komatsushima-shi, Tokushima 773-0008 (JP)
(74) Representative: Goddar, Heinz J., Dr.
(86) International application number: PCT/JP2002/004832
(87) International publication number: WO 2002/093570

(57) **Abstract**

An optical disk adhesive curing device wherein adhesive adhering to the lower surface of an optical disk having passed through the application and spreading process of the adhesive for the integration of the optical disk substrate constitutes no problem during the subsequent adhesive curing and finishing process.

The optical disk adhesive curing device comprises a UV-ray irradiating base (1) made of a UV-ray transmitting material wherein a boss section (1B) coated with tetrafluoroethylene resin is projecting at the center and a region for preventing any contact with the disk substrate (D) is provided on the upper surface around the boss section, a UV-ray irradiation source (5) for irradiating UV-ray towards the UV-ray irradiating base, and a disk retainer (2) for pushing the disk substrate up to a position where the disk substrate (D) touches the surface of the UV-ray irradiating base (1) wherein the region for preventing any contact with the disk substrate is a recess (ID).

## Description

### Technical Field

### (Technical Field Pertinent to the Invention)

This invention relates to a curing device for curing an adhesive agent intervening between two single plates forming an optical disk such as DVD (digital versatile disk) and integrating both single plates.

### Background Art

### (Prior Art)

The optical disks represent a rapidly progressing technological field, and as their capacity grow larger, their information reading performance improves further.

For example, a DVD is made by laminating two thin disk single plates (disk substrate) with an adhesive agent and integrating them. A high dimensional precision is required to read information from the impressed pits with laser beams.

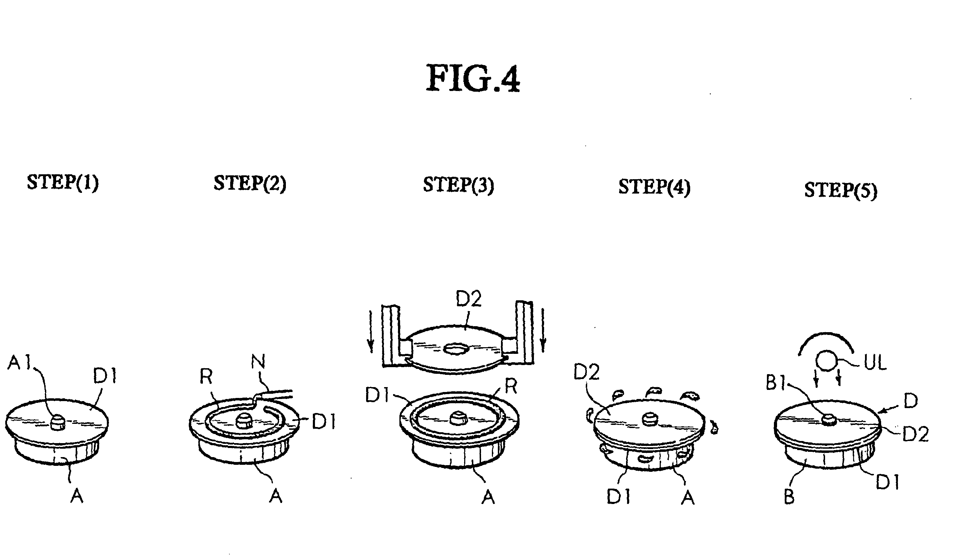

The conventional method of integrating DVD disk substrate consists of, for example, as shown in Fig. 4, the step of applying the adhesive agent on a spin table, the step of spreading the adhesive agent and the step of curing and finishing the adhesive agent on the UV-ray irradiation table.

The first step of working on the spin table is placing the lower disk single plate D1 on the spin table A (Step 1).

Then, a UV-ray curing resin R constituting the adhesive agent is applied in the form of a ring on the disk single plate through a nozzle N (Step 2).

And then, an upper disk single plate D2 is placed thereon (Step 3).

Then, the spin table A is rotated so that both single plates D1 and D2 placed thereon rotate together and that the UV-ray curing resin R intervening between both disk single plates would spread extensively by the operation of centrifugal force (Step 4).

At this time, air is sucked through a hole created at the position of laminating single plates around the boss section A1 at the center of the spin table A to ensure that UV-ray curing resin R spreads sufficiently towards the center of the disk substrate D.

When the step of spreading on the spin table A ends, both disk single plates D1 and D2 (i.e., disk substrate D) is transferred onto the UV-ray irradiating base B.

There UV-ray is irradiated and the spread UV-ray curing resin cures, and both disk single plates D1 and D2 are integrated thus completing the whole process (Step 5).

However, during the process of integrating disk substrate of DVD and other optical disks mentioned above, the adhesive agent sucked through a hole of the boss section A1 of the spin table A during the spreading step is sucked into another region that sucks and fixes the disk substrate D to the spin table A and often reaches to the central hole of the disk substrate D and its backside.

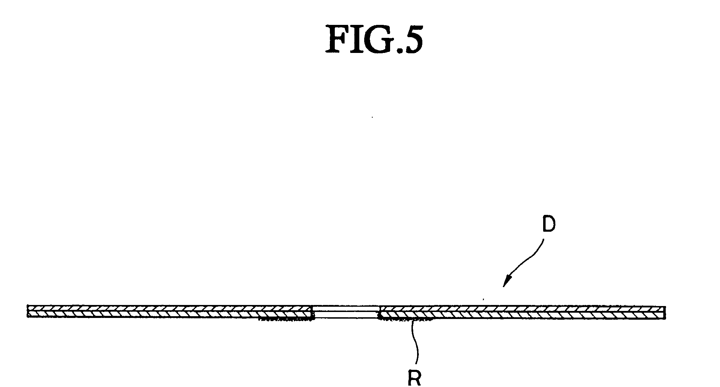

Fig. 5 is a schematic view showing the adhesive agent R adhering to the backside of the central hole of the disk substrate D.

When a disk substrate the backside of which is partially covered with the adhesive agent R is placed on the UV-ray irradiation table B and is irradiated with UV-ray in the subsequent step, the adhesive agent on the backside also cures, and the disk substrate D is firmly fixed on the UV-ray irradiation table B and cannot be easily separated therefrom. Thus, there develops an error of taking up the disk substrate.

In addition, the unevenness of the UV-ray irradiating base resulting from the presence of adhesive agent adhering thereto brings about tilt defect (warp, twist, distortion and other deformation) of the disk substrate.

Moreover, it is difficult to clean the UV-ray irradiating base of any adhesive agent that adheres thereto.

On the other hand, when the disk substrate D is transferred onto the UV-ray irradiation table B, the adhes ive agent R adhering to the central hole of the disk substrate D adheres on the boss section B1 of the UV-ray irradiation table B.

And the adhesive agent R cures due to the irradiation of UV-ray and the outside diameter of the boss section B1 grows larger. Thus, at the subsequent transfer of the disk substrate, it will be difficult to fit the disk substrate D to the boss section B1.

### (The problem that this invention tries to solve)

This invention has been made intending to solve such problems under such technical background.

Thus, it is the object of this invention to provide an optical disk adhesive curing device capable of performing without any hitch the subsequent curing and finishing step even if an optical disk that has gone through the step of applying and spreading the adhesive agent finds adhesive agent adhering to its backside during the process of integrating the optical disks substrate.

### Disclosure of the invention

### (Means for solving the problem)

This invention is based on the finding that the problem can be solved by paying attention to the shape of the table for placing the optical disk substrate, or the UV-ray irradiating base made by the investors as a result of intense study.

In other words, this invention relates [1] to an optical disk adhesive curing device comprising (1) a UV-ray irradiating base made of a UV-ray transmitting material wherein [1] a boss section (1B) projects at the center and a region for preventing the contact of the disk substrate (D) is provided on the upper surface around the boss section, and a UV-ray irradiation source (5).

And this invention relates also [2] to an optical disk adhesive curing device wherein the region for preventing the contact with the disk substrate (D) is a recess (ID).

And this invention relates also [3] to an optical disk adhesive curing device of which the surface of the boss section (1B) is covered with a tetrafluoroethylene resin layer.

And this invention relates also [4] to an optical disk adhesive curing device comprising a disk retainer (2) for pushing the disk substrate (D) up to a position where the disk substrate (D) touches the surface of the UV-ray irradiating base (1).

And this invention relates also [5] to an optical disk adhes ive curing device wherein the adhesive agent (R) cured after adhering to the boss section (1B) is scraped off by the edge of the central hole of the disk substrate (D) when the disk retainer (2) is pushed.

And this invention relates also [6] to an optical disk adhesive curing device wherein the recess (1D) around the boss section serves to prevent any contacts between the disk substrate (D) and the UV-ray irradiating base (1) and to pool the cured adhesive agent that has been scraped off by the boss section (1B).

And this invention relates also [7] to an optical disk adhesive curing device wherein the UV-ray irradiating base (1) is disposed on the turn table (4) and is mobile.

And this invention relates also [8] to an optical disk adhesive curing device comprising a UV-ray irradiating base (1) made of a UV-ray transmitting material wherein a boss section (1B) covered with a tetrafluoroethylene resin layer protrudes at the center, and a region for preventing any contact with the disk substrate (D) is provided on the upper surface around the boss section, a UV-ray irradiation source (5) for irradiating UV-ray towards the UV-ray irradiating base (1), and a disk retainer (2) for pushing the disk substrate (D) up to the point where the disk substrate (D) touches the surface of the UV-ray irradiating base (1), wherein the region for preventing any contact with the disk substrate is a recess.

In the meanwhile, for this invention, any combination of two or more constructions chosen from the items 1 to 8 above may be employed provided that they serve for this purpose.

### (Effect of the invention)

As described above, as the optical disk adhesive curing device of this invention has a region, a recess for preventing any contact with the disk substrate on the upper surface around the boss section, even if the adhesive agent reaches the central hole of the disk substrate and its back side during the spreading process of the adhesive agent for integrating the disk substrate, the disk substrate does not stick fast to the UV-ray irradiating base and become inseparable. Therefore, there will be no error of taking out disk substrate.

Furthermore, the surface of the UV-ray irradiating base does not become uneven. No cleaning will be required and the tilt defect of the disk substrate does not develop.

And when the surface of the boss section is coated with a tetrafluoroethylene resin layer, the adhesive agent adhering to the inside of the central hole of the disk substrate will be less likely to adhere to the boss section. Even if it does adhere thereto, it will be easily scraped off by the edge of the central hole of the disk substrate when the disk retainer is pushed.

Therefore, there will be absolutely no trouble to the curing process of the adhesive agent.

### Brief Description of Drawing

Fig. 1 is a longitudinal sectional view showing the relationship between the transfer apparatus and the optical disk adhesive curing device of this invention.
Fig. 2 is a longitudinal sectional view showing the relationship between the optical disk adhesive curing device and the disk retainer of this innovation.
Fig. 3 is a view showing an example of UV ray irradiation by the UV-ray irradiation source.
Fig. 4 is a schematic perspective view describing each step of the general integration process of a disk substrate.
Fig. 5 is schematic view showing the adhesive agent R adhering to the backside of the central hole of the disk substrate.

### Best Mode for Carrying Out the Invention

### (Mode for Carrying Out the Invention)

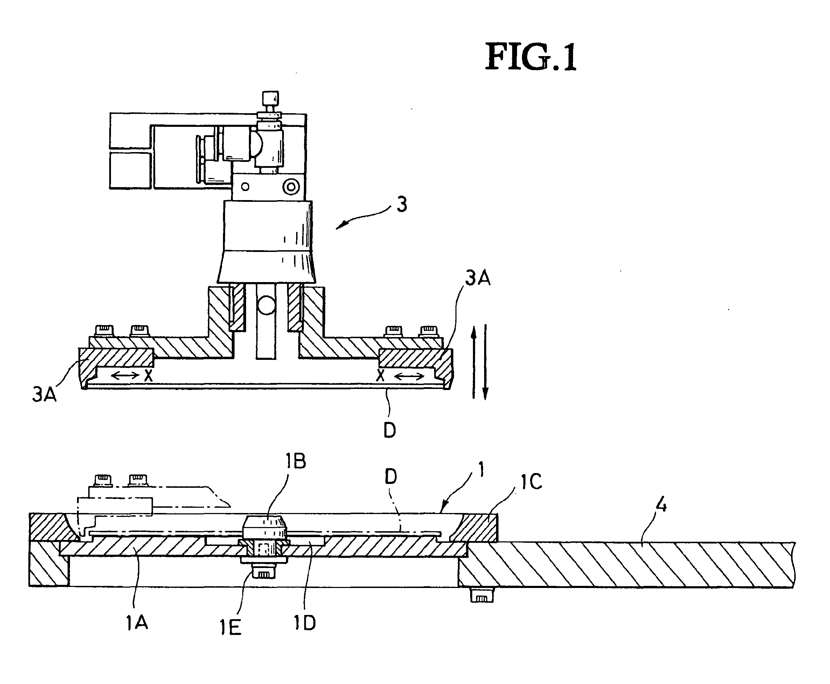

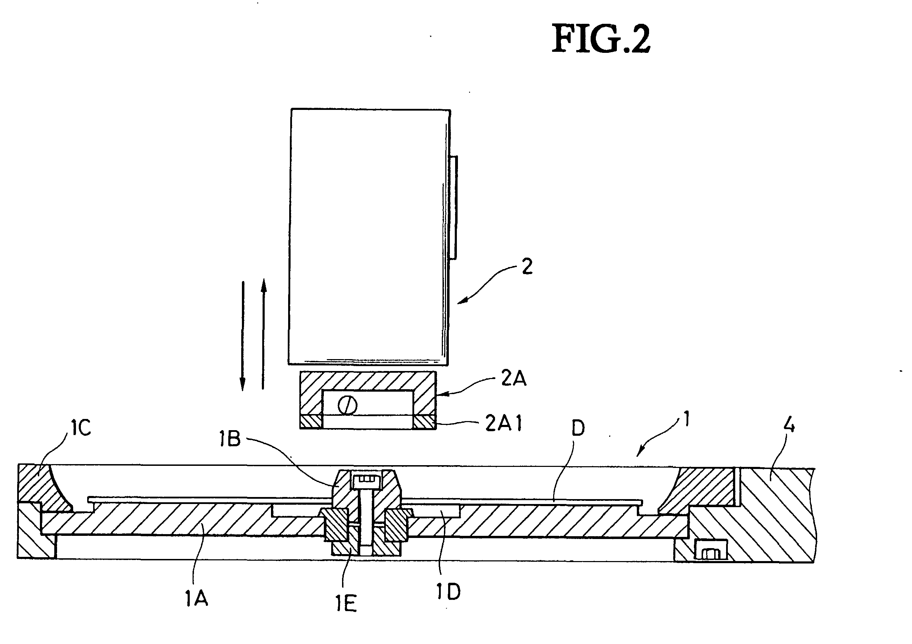

The mode for carrying out the optical disk adhesive curing device of this invention will be described by referring to Figs. 1 and 2.

This optical disk adhesive curing device is a device performing the latter half of the disk substrate integration process comprising the steps of applying and spreading on the spin table A and the curing and finishing step of the adhesive agent on the UV-ray irradiating base 1, and is a device for curing the adhesive agent R consisting of UV-ray curing resin spread between the lower and upper single disks by irradiating UV-ray thereon for their integration.

And this device comprises a UV-ray irradiating base 1 for loading a disk substrate D in which the adhesive agent has been spread, and a disk retainer 2 for pushing the disk substrate D that has been transferred up to a position where the disk substrate D touches the surface of the UV-ray irradiating base 1 and a UV-ray irradiation source not shown in the figure for irradiating UV-ray towards the disk substrate D on the UV-ray irradiating base 1.

Incidentally, the disk substrate of which the adhesive agent has been spread is transferred from the spin table A to the UV-ray irradiating base 1 using a transfer device 3.

The UV-ray irradiating base 1 comprises a discoidal main body 1A made of a light-transmitting material such as UV-ray transmitting quartz glass and a boss section 1B projecting upward at the center of the main body 1A.

Here, one provided additionally with an annular mirror body 1C disposed around the main body 1A is shown.

This mirror body 1C is designed to improve the efficiency of the UV-ray irradiation towards the disk substrate D and around.

The UV-ray irradiating base 1 is disposed on the discoidal turntable 4 and is mobile.

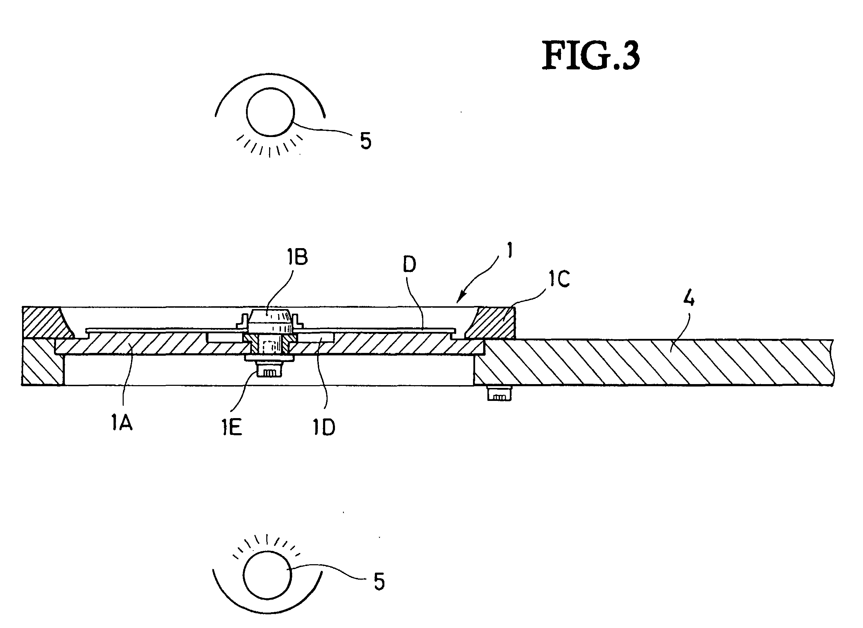

Therefore, as the turntable 4 rotates, the UV-ray irradiating base 1 moves to the position where the UV-ray irradiation source is disposed, and UV-ray is irradiated thereto from above and below (See Fig. 3).

It is possible, however, to make the disk retainer 2 shown in Fig. 2 retreat and to irradiate UV-ray immediately thereafter from the UV-ray irradiation source 5.

A region for preventing the contact with the disk substrate D is formed on the surface around the boss section 1B of the UV-ray irradiating base 1A.

For example, a region formed lower than the upper surface of the UV-ray irradiating base 1A, specifically an annular recess 1D is provided.

This region or recess 1D is within a limit that can cover an annular projecting section normally formed on the disk substrate D.

The boss section 1B is made of, for example, stainless steel and is fixed at the center of the UV-ray irradiating base 1A with a screw 1E.

This boss section 1B osculate with a hole created at the center of the disk substrate D for positioning when the disk substrate D is transferred to UV-ray irradiating base 1A, and at it tip a taper is formed to facilitate the osculation of the disk substrate D.

The outside diameter of the boss section 1B is made a little smaller than the inside diameter of the central hole of the disk substrate D.

For example, when the inside diameter of the central hole of the disk single plate D is 15mm, the outside diameter of the boss section 1B is made smaller by 50 - 100µm (0.05 - 0.1mm).

And the surface of the boss section 1B is coated with a tetrafluoroethylene resin (made by Du Pont K.K. and marketed under the commercial name of "Teflon") layer 5 - 10µm thick.

The presence of this resin layer enables to prevent the removal of the adhesive agent adhering to the inside wall of the central hole of the disk substrate D to the boss section 1B, and in case the adhesive agent did remove and adhere thereto, it can be easily scraped off.

The mirror body 1C is a metallic part integrated with a section formed at a rather low position around the UV-ray irradiating base 1A.

The inside wall of the mirror body 1C is a concave mirror that focuses the UV-ray irradiated from above on the lamination section between the upper and the lower single plates.

As shown in Fig. 2, the disk retainer 2 descends after transferring the disk substrate D from the spin table during the preceding step to the UV-ray irradiating base 1, and pushes the disk substrate D until it touches the surface of the UV-ray irradiating base 1A.

This disk retainer 2 has a saucer-like retaining member 2A having an inside diameter sufficiently larger than the outside diameter of the boss section 1B.

Incidentally this retaining member 2A is provided with an annular cushion 2A1 at a point where it contacts with the disk substrate D.

The transfer apparatus 3 transfers the disk substrate D from the spin table A to the UV-ray irradiating base 1 after the adhesive agent has been spread between the upper and lower disk single plates on the spin table.

On both sides of its center is provided a chuck 3A for clutching a disk substrate D, transferring and releasing the same (mobile in the direction of the arrow X as shown in Fig. 1).

The transfer apparatus shown by a chain line with one dot in Fig. 1 is in the closest position to the UV-ray irradiating base 1A holding a disk substrate D.

Incidentally, in lieu of the mechanical chuck mentioned above, a suction chuck with suction air operating on the surface of the disk substrate D may be used.

In an optical disk adhesive curing device thus constructed, a disk substrate D that has gone through the preceding steps of applying and spreading the adhesive agent is transferred onto the UV-ray irradiating base 1A by means of the transfer apparatus 3. It is then brought by the disk retainer 2 to fit on the boss section 1B.

And the UV-ray irradiation source 5 irradiates UV-ray causing the adhesive agent made of a UV-ray curing resin spread between the upper and lower disk single plates composing the disk substrate D to be cured, and thus causing the lower and upper single plates to be integrated.

Since the outside diameter of the boss section 1B is made very slightly smaller than the inside diameter of the central hole of the disk single plate, even if adhesive agent has adhered to the boss section 1B and has cured, the cured adhesive agent is scraped off by the edge of the central hole of the disk substrate D when the disk retainer 2 pushes the subsequent different disk substrate D.

And the adhesive agent thus scraped off falls down onto a recess 1D created around the boss section to be pooled there.

Thus, this recess 1D not only plays the role of preventing the contact between the disk substrate D and the UV-ray irradiating base 1A but also serves as a receptacle for pooling the cured adhesive agent that has been scraped off by the boss section 1B.

Incidentally, the scraped waste of the cured adhesive agent pooled in the recess 1D is removed by the operation of a suction apparatus not shown when a certain prescribed amount has been reached.

It is possible, however, to remove such scraped waste of adhesive agent by suction when each disk substrate that has been irradiated with UV-ray is taken out.

It should be noted moreover that this invention is not limited to this mode of carrying out, and any other variations can be employed provided that they do not divert from the essence of this invention.

### Industrial applicability

This invention relates to a curing device for curing an adhesive agent intervening between two single plates constituting an optical disk such as DVD (digital versatile disk) and for integrating them.

However, this invention can be applied to any technology for integrating two-plate members other than optical disks provided that the technology is in a field where a similar effect can be expected and that it does not divert from its basic principle.

## Claims

1. An optical disk adhesive curing device comprising a UV-ray irradiating base (1) made of a UV-ray transmitting material wherein a boss section (1B) is projecting and a region for preventing any contact with the disk substrate (D) is provided on the upper surface around the boss section and a UV-ray irradiation source (5) for irradiating UV-ray towards the UV-ray irradiating base.

2. The optical disk adhesive curing device according to claim 1 wherein the region for preventing any contact with the disk substrate (D) is a recess (1D).

3. The optical disk adhesive curing device according to claim 1 wherein the boss section (1B) is covered with a tetrafluoroethylene resin layer.

4. The optical disk adhesive curing device according to claim 1 comprising a disk retainer (2) for pushing the disk substrate (D) to a position where the disk substrate touches the surface of the UV-ray irradiating base (1).

5. The optical disk adhesive curing device according to claim 1 wherein the adhesive agent (R) that had adhered to the boss section (1B) and cured is scraped off by the edge of the central hole of the disk substrate (D) when the disk retainer (2) is pushed therein.

6. The optical disk adhesive curing device according to claim 2 wherein a recess (1D) made around the boss section serves as a means of preventing any contact between the disk substrate (D) and the UVC-ray irradiating base (1) and as a receptacle for pooling the cured adhesive agent scraped off the boss section (1B).

7. The optical disk adhesive curing device according to claim 1 wherein the UV-ray irradiating base (1) is disposed mobile on the turntable (4).

8. An optical disk adhesive curing device comprising a UV-ray irradiating base (1) made of a UV-ray transmitting material whereinaboss section (1B) coatedwithtetrafluoroethylene resin is projecting at the center and a region for preventing any contact with the disk substrate (D) is provided on the upper surface of its periphery, a UV-ray irradiation source for irradiating UV-ray towards the UV-ray irradiating base, and a disk retainer (2) for pushing the disk substrate up to a position where the disk substrate (D) touches the surface of the UV-ray irradiating base (1) wherein the region for preventing any contact with the disk substrate is a recess (ID).
